# EUROPEAN PATENT APPLICATION

(11) **EP 2 258 591 A2**
(43) Date of publication of application: **08.12.2010**
(21) Application number: 10382227.6
(22) Date of filing: 10.08.2010
(51) Int. Cl.: B60R 22/18, B60R 22/20, B60R 22/26

(54) **Guiding system for the safety belt securing passengers of a vehicle**

(30) Priority: 16.10.2009 ES 200902025
(71) Applicant: Fabricacion Asientos Vehiculos Industriales, S.A., 08107 Martorelles (ES)
(72) Inventor: Singla Casasayas, Juan, 08107, MARTORELLES (ES)
(74) Representative: Sugrañes Patentes y Marcas

(57) **Abstract**

The invention relates to a guiding system (1) for the safety belt securing the passengers of a vehicle to their seat (5), comprising two lower anchor points (2,3) and deflection means (4) preferably fixed to the seat for redirecting the webbing from one of the lower anchors towards the rear part of the seat, towards a point arranged above the level of the deflection means, in which the deflection means comprise a groove (8) in which the webbing is inserted, the end sections (8a,8b) of the groove being convex curved, with the concavity directed towards the rear part of the backrest of the seat, and the outer edge of the front wall (12) of the groove being formed by a bearing surface (13) with a rounded cross-section on which the webbing is borne and freely slides, all of it such that the exit direction of the webbing through the groove varies according to the deflection height, i.e., according to the position occupied by the webbing along the groove.

## Description

### Technical Field of the Invention

The invention relates to a guiding system for the safety belt securing the passengers of a vehicle and to a seat especially suitable for putting the system of the invention into practice.

### Background of the Invention

Patent document ES 2253063 discloses a guiding system for safety belts comprising in a known manner two lower anchor points for the webbing of the belt and deflection means, suitable for redirecting the webbing of the safety belt from one of the lower anchor points to a recoil and restraint device arranged behind the seat, all of it such that a section of the webbing of the safety belt is arranged diagonally on the torso of the occupant of the seat.

The mentioned deflection means described in patent document ES 2253063, which in a specific embodiment are coupled to the edge of one of the sides of the seat of the vehicle, are formed by a sliding plate suitable for receiving the free bearing of the webbing, which is automatically applied against the plate at the optimum height depending on the height of the occupant of the seat.

It has been demonstrated by experience that the shape of the bearing surface of the sliding plate on which the webbing slides is very important for the correct operation of the described system.

More specifically, it has been verified for example that unsuitable shapes cause the effect that the webbing does not automatically move, without needing an intentional action, to the lowermost end of the bearing surface when the occupant is short.

A first objective of the present invention is to disclose an improved system, which assures the correct and automatic position of the webbing on the sliding plate, especially in the cases in which the occupant is not an adult or is short.

In addition, when the webbing is not arranged in the optimum location on the sliding plate, it foments other drawbacks when the webbing is handled during the adjustment operations, before the safety belt is fastened by the occupant, or during the normal operation thereof. Thus for example, when the webbing is not placed at the correct height and is forced to be directed towards one of the lower anchors, said webbing is not uniformly applied on the bearing surface of the sliding plate, such that the stresses that the webbing would experience in the event of a collision would be unequally absorbed by the threads forming it, the effective width of the webbing not being properly used to absorb said stresses.

Therefore, another objective of the present invention is an improved system by means of which the webbing is uniformly applied widthwise on the sliding plate, whatever the height of the deflection point.

### Disclosure of the Invention

The proposed guiding system for guiding the safety belt solves the aforementioned drawbacks. This system is of those comprising two lower anchor points located on both sides of the seat to arrange the webbing of the belt transversely on the lower part of the torso of an occupant of the seat, and deflection means fixed to the vehicle bodywork or to the associated seat, for redirecting the webbing from one of the lower anchors towards the rear part of the seat, towards a point arranged above the level of the deflection means and such that the webbing is diagonally positioned on the torso of a passenger.

In essence, the system is **characterized in that** said deflection means comprise a groove in which the webbing is inserted, the upper and lower end sections of which are convex curved, with the concavity directed towards the rear part of the backrest of the seat, the outer edge of the front wall of the groove being formed by a bearing surface with a rounded cross-section on which the webbing is borne and freely slides, all of it such that the exit direction of the webbing through the groove varies according to the deflection height, i.e., according to the position occupied by the webbing along the groove.

According to another feature of the invention, the bearing surface of the webbing has a dished profile along its entire length, its most protruding portion corresponding to the central section of the groove, such that the webbing tends to slide by gravity towards the lower end section of the groove automatically when it is used by a short occupant.

Preferably, the radius of curvature of the dished profile of the bearing surface of the webbing is less than 800 mm.

In a particularly interesting embodiment, the radius of curvature of the dished profile of the bearing surface of the webbing is comprised between 445 and 455 mm.

According to another feature of the invention, the radius of curvature of the rounded cross-section of the bearing surface of the webbing is comprised between 10 and 40 mm.

In a variant of the invention, the value of the radius of curvature of the rounded cross-section of the bearing surface of the webbing is less in the end sections of the groove in comparison with that of its central section.

According to another aspect of the invention, there is disclosed a seat for a vehicle, comprising a backrest in one of the side edges of which a plate provided with the groove intended to be traversed by the webbing of the safety belt is fixed in a manner that is essentially coplanar to said edge.

In essence, the seat is **characterized in that** the groove has a concave curved shape, with the concavity directed towards the rear part of the backrest of the seat, and in that the outer edge of the front wall of the groove, which forms a bearing surface intended to receive the sliding bearing of the webbing, has a rounded cross-section.

According to a variant of the invention, the bearing surface of the webbing has a dished profile along its entire length, its most protruding portion corresponding to the central section of the groove, the radius of curvature of the dished profile of the bearing surface of the webbing preferably being less than 800 mm.

According to another aspect of the invention, the groove of the plate fixed to the seat follows a concave curved shape with a single center, with a radius comprised between 200 and 500 mm and with an angular length comprised between 50º and 65º.

The radius of curvature of the rounded cross-section of the bearing surface of the webbing is preferably comprised between 10 and 40 mm.

According to another feature, the plate is provided with a transverse cut extending from the rear wall of the groove to the corresponding edge of the plate.

In an embodiment variant, a preferably metal auxiliary support piece provided with a groove similar to the groove of the plate is firmly fixed to the backrest of the seat behind the plate such that both grooves are superimposed.

### Brief Description of the Drawings

Figures 1 and 2 are front and side views, respectively, of a seat of a transportation vehicle, such as a coach;
Figure 3 is a front view of a plate provided with a guiding groove for the webbing of the safety belt, for putting the system according to the invention into practice;
Figure 4 is a side view of the plate of Figure 3;
Figure 5 is a view of the rear part of the plate of Figure 3;
Figures 6 and 7 are cross-section views according to the planes of section AA and DD, respectively, of the plate of Figure 3; and
Figure 8 is a schematic view of the plate in correlative coupling position in an opening provided for such purpose in the backrest of a seat.

### Detailed Description of the Invention

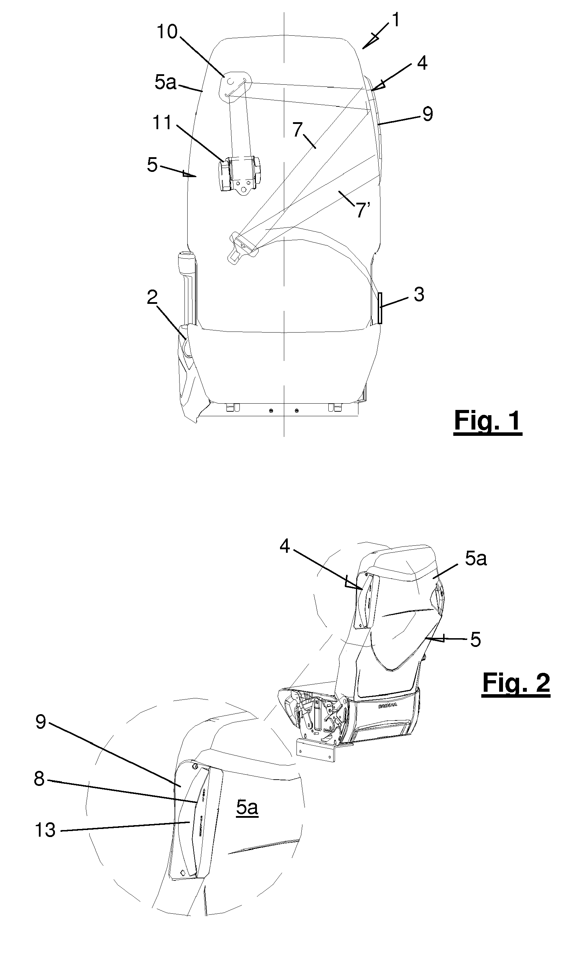

Figure 1 depicts an embodiment of the system 1 according to the invention in which the deflection means 4 are fixed to the seat 5 on which the safety belt of the system acts.

This embodiment is particularly interesting for seats 5 with reclining backrests 5a, since it assures the proper securing of the occupant independently of the position the backrest 5a adopts.

The system 1 comprises in a known manner two lower anchor points 2 and 3 for arranging a section of the webbing 7 of the safety belt transversely on the lower part of the torso of an occupant of the seat 5; the aforementioned deflection means 4, which redirect the webbing 7 from the lower anchor 2 towards the rear part of the seat 5; and second auxiliary deflection means 10, located at a level above the deflection means 4, which redirect the webbing 7 towards supply and restraint means 11 for supplying and restraining the webbing 7. In order to aid in understanding the system 1, Figures 1 and 2 depict the webbing 7 of the safety belt in a position immediately prior to that of its coupling, in a secure manner and by means of a conventional buckle, to the lower anchor 2 of the system 1.

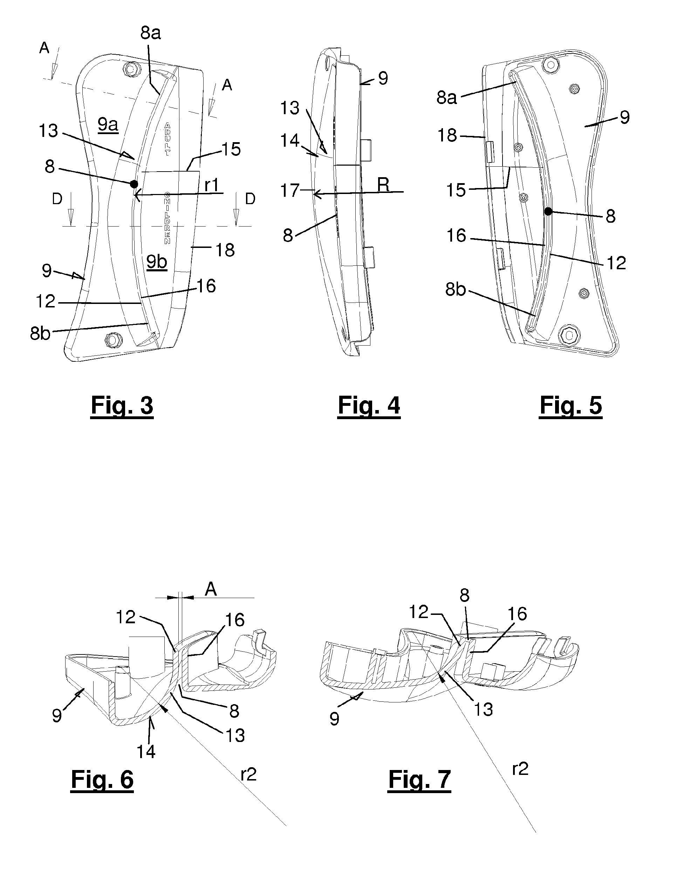

It is seen in the variant of Figure 1 that the deflection means 4 are formed by a plate 9 fixed on one of the side edges of the backrest 5a of the seat 5. The plate 9 (depicted in detail in Figures 3 to 7) is provided with a groove 8 in which the webbing 7 of the safety belt is inserted, which webbing 7 can move freely along the mentioned groove 8.

The groove 8 of the plate 9 has a concave curved shape, and it is observed in Figure 2 that said plate 9 is fixed to the seat 5 such that the concavity of the groove 8 is directed towards the rear part of the backrest 5a of the seat 5. The curvature of the groove 8, described in detail below, allows the exit direction of the webbing 7 towards the lower anchor 2 to vary according to the deflection height, i.e., according to the position occupied by the webbing 7 along the groove 8. This effect is observed in Figure 1, in which the section of the webbing 7 intended for crossing the torso of the occupant of the seat 5 in two different positions corresponding to the maximum and minimum height, respectively, has been depicted.

In the example of the drawings the curve of the groove 8 has a single center, the radius r1 of the curve of the groove 8 being 250 mm and the angular length of the latter greater than 55º. In practice, this means that the distance separating the ends of the groove 8 is of approximately 220 mm.

The width A of the groove 8 (see Figure 6) is preferably less than 2 mm, preferably being 1.8 mm, to prevent the webbing 7 from folding over itself.

As is seen in Figures 6 and 7, the groove 8 is determined by two walls, a front wall 12 and a rear wall 16, emerging from the rear surface of the plate 9 and extending in a direction essentially transverse to the body of the plate 9. The front and rear walls 12 and 16 are essentially parallel to one another but it is observed, nevertheless, that the outer edge of the front wall 12 forming the bearing surface 13 for the webbing 7 has a rounded cross-section, the radius of curvature r2 being comprised between 10 and 40 mm, preferably being 26 mm in the end sections 8a and 8b of the groove 8. This feature advantageously allows the webbing 7 to be uniformly applied on the bearing surface 13 in the event of a collision or an abrupt deceleration of the vehicle.

As regards the mentioned bearing surface 13, it is important to point out that the latter has a dished profile along its entire length, its most protruding portion 17 corresponding to the central section of the groove 8, all of it as reflected in Figure 4. This allows the webbing 7 to slide automatically and by gravity towards the lower end section 8b of the groove 8 when drawn from a height corresponding to that of a short passenger. Similarly, when the exit direction of the webbing 7 corresponds to that of a stout or taller occupant, the slope of the dishing assures that the webbing 7 is maintained in the upper section 8a of the groove 8, especially during its handling in the closing operation. The optimum radius of curvature R of the dished profile 14 of the bearing surface 13 of the webbing 7 is approximately 450 mm.

The plate 9 is formed by a single body of plastic material and the groove 8, which virtually traverses the plate 9 longitudinally, differentiates the operative surface of the plate 9 into a front half and a rear half, 9a and 9b respectively (see Figure 5), the rear half 9b of which is provided with a spark erosion finish while the front half 8a is provided with a mirror polish finish, to allow sliding the webbing 7 with minimum friction.

For the purpose of aiding the assembly of the system 1 in a vehicle, the plate 9 is provided with a transverse cut 15 extending from the rear wall 16 of the groove 8 to the corresponding edge 18 of the plate 9. The seat 5 can thus be installed in a vehicle already provided with the webbing 7, with the supply and restraint means 11 and with the lower anchor means 2 and 3, the webbing 7 being able to be introduced in the groove 8 of the plate 9 through the transverse cut 15 without needing to remove the buckle associated with the webbing 7 or decoupling the end of the webbing 7 from the anchor means 3.

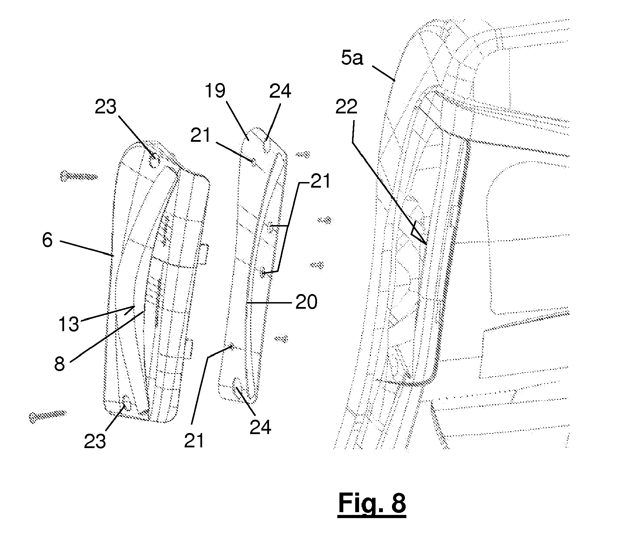

For the purpose of preventing the breaking of the plate 9 when the webbing exerts an extraordinary force on the front wall 12 of the groove 8, a situation that can occur for example in the event of a collision or a sudden and abrupt deceleration of the vehicle, the seat 5 is provided with a preferably metal auxiliary support piece 19, interposed between the plate 9 and the backrest 5a of the seat. This auxiliary support piece 19, depicted in Figure 8, is provided with a groove 20, in correspondence with the groove 8 of the plate 9, and with means for the secure fixing thereof to the backrest 5a of the seat, covering the opening 22 for supplying the webbing. In the depicted example, it is observed that the auxiliary support piece 19 is provided with through holes 21 for the fixing thereof by means of screws to the backrest 5a of the seat 5.

The plate 9 and the auxiliary support piece 19 incorporate respective pairs of through holes 23 and 24 for the fixing of the plate 9 to the backrest 5a of the seat. The pairs of holes 23 and 24 must necessarily be axially aligned to fix the plate 9 to the backrest 5a by means of screws, thus assuring the superimposition of the groove 8 of the plate with the groove 20 of the auxiliary support piece 19. Both grooves are intended to be traversed by the webbing of the safety belt for implementing the system according to the invention, and in the event of a collision, as has been previously explained, the insertion of the webbing in the groove 21 would hinder the latter from exerting an unwanted force on the plate 9.

## Claims

1. A guiding system (1) for guiding the safety belt securing the passengers of a vehicle to their seat (5), of those comprising two lower anchor points (2, 3) located on both sides of the seat to arrange the webbing (7) of the belt transversely on the lower part of the torso of an occupant of the seat, and deflection means (4) fixed to the vehicle bodywork or to the associated seat, for redirecting the webbing from one of the lower anchors towards the rear part of the seat, towards a point arranged above the level of the deflection means, and such that the webbing is diagonally positioned on the torso of a passenger, **characterized in that** said deflection means comprise a groove (8) in which the webbing is inserted, the upper (8a) and lower (8b) end sections of which are convex curved, with the concavity directed towards the rear part of the backrest (5a) of the seat, the outer edge of the front wall (12) of the groove being formed by a bearing surface (13) with a rounded cross-section on which the webbing is borne and freely slides, all of it such that the exit direction of the webbing through the groove varies according to the deflection height, i.e., according to the position occupied by the webbing along the groove.

2. The system (1) according to the previous claim, **characterized in that** the bearing surface (13) of the webbing (7) has a dished profile along its entire length, its most protruding portion corresponding to the central section of the groove (8).

3. The system (1) according to claim 2, **characterized in that** the radius of curvature (R) of the dished profile (14) of the bearing surface (13) of the webbing (7) is less than 800 mm.

4. The system (1) according to claim 3, **characterized in that** the radius of curvature (R) of the dished profile (14) of the bearing surface (13) of the webbing (7) is comprised between 445 and 455 mm.

5. The system (1) according to any one of the previous claims, **characterized in that** the radius of curvature (r2) of the rounded cross-section of the bearing surface (13) of the webbing (7) is comprised between 10 and 40 mm.

6. The system (1) according to the previous claim, **characterized in that** the value of the radius of curvature (r2) of the rounded cross-section of the bearing surface (13) of the webbing (7) is less in the end sections of the groove (8) in comparison with that of its central section.

7. A seat (5) for a vehicle, comprising a backrest (5a) in one of the side edges of which a plate (9) provided with a groove (8) intended to be traversed by the webbing of a safety belt is fixed in a manner that is essentially coplanar to said edge, **characterized in that** the groove has a concave curved shape, with the concavity directed towards the rear part of the backrest of the seat, and **in that** the outer edge of the front wall (12) of the groove, which forms a bearing surface (13) intended to receive the sliding bearing of the webbing, has a rounded cross-section.

8. The seat (5) according to the previous claim, **characterized in that** the bearing surface (13) of the webbing has a dished profile along its entire length, its most protruding portion corresponding to the central section of the groove (8).

9. The seat (5) according to the previous claim, **characterized in that** the radius of curvature (R) of the dished profile (14) of the bearing surface (13) of the webbing (7) is less than 800 mm.

10. The seat (5) according to any one of claims 7 to 9, **characterized in that** the groove (8) follows a concave curved shape with a single center, with a radius (r1) comprised between 200 and 500 mm and with an angular length comprised between 50º and 65º.

11. The seat (5) according to the previous claim, **characterized in that** the radius of curvature (r2) of the rounded cross-section of the bearing surface (13) of the webbing (7) is comprised between 10 and 40 mm.

12. The seat (5) according to any one of claims 7 to 11, **characterized in that** the plate (9) is provided with a transverse cut (15) extending from the rear wall (16) of the groove (8) to the corresponding edge of the plate.

13. The seat (5) according to any one of claims 7 to 12, **characterized in that** a preferably metal auxiliary support piece (19) provided with a groove (20) similar to the groove (9) of the plate (9) is firmly fixed to the seat behind the plate (9) such that both grooves are superimposed.
